# EUROPÄISCHE PATENTSCHRIFT

(11) **EP 2 152 612 B1**
(45) Veröffentlichungstag und Bekanntmachung des Hinweises auf die Patenterteilung: **01.09.2010**
(21) Anmeldenummer: 08758439.7
(22) Anmeldetag: 09.05.2008
(51) Int. Cl.: B65G 13/06, B64D 9/00

(54) **VORRICHTUNG ZUM TRANPORTIEREN VON FRACHTGUT**
DEVICE FOR TRANSPORTING FREIGHT
DISPOSITIF DE TRANSPORT DE FRET

(30) Priorität: 21.05.2007 DE 102007023835
(43) Veröffentlichungstag der Anmeldung: 17.02.2010
(73) Patentinhaber: Wittenstein AG, 97999 Igersheim (DE)
(72) Erfinder: ECK, Alexander, 97957 Poppenhausen (DE)
(74) Vertreter: Weiss, Peter
(86) Internationale Anmeldenummer: PCT/EP2008/003753
(87) Internationale Veröffentlichungsnummer: WO 2008/141738

(56) Entgegenhaltungen:
- DE-A1-102005 030 058
- DE-C1- 19 608 236
- US-A- 3 698 539

## Beschreibung

Die vorliegende Erfindung betrifft eine Vorrichtung zum Transportieren von Frachtgut, insbesondere von Frachtcontainern in Frachträumen von Flugzeugen, insbesondere Power Drive Unit (PDU) mit einer in einem Rahmen gelagerten Antriebswalze und einer Lifteinheit.

### STAND DER TECHNIK

Bei herkömmlichen Vorrichtungen zum Transportieren von Frachtgut, insbesondere von Frachtcontainern in Frachträumen von Flugzeugen, werden Power Drive Unit's (PDU) eingesetzt, die eine sehr komplizierte mechanische Lifteinheit aufweisen, um eine Antriebswalze gegen ein zu transportierendes Frachtgut, wie bspw. gegen einen Boden eines Frachtcontainers, herauszuschwenken und anzupressen, um diesen aktiv oder passiv zu bewegen.

Insbesondere sind an derartige Lifteinheiten von PDU's hohe Anforderungen gestellt. Sie unterliegen einer mechanisch sehr hohen Belastung und müssen daher zuverlässig im Betrieb arbeiten.

Nachteilig ist, dass bisher mechanisch aufwendige Systeme und Antriebe verwendet werden, um bspw. mittels Exzenternocken die Lifteinheit und somit die Antriebswalze aus dem Rahmenbereich der PDU herauszubewegen, siehe z.B. DE 10 2005 030 058 A1.

### AUFGABE

Der vorliegenden Erfindung liegt daher die Aufgabe zugrunde, eine Vorrichtung der eingangs genannten Art zu schaffen, welche die genannten Nachteile beseitigt und mit welcher auf sehr einfache und kostengünstige Weise eine Antriebswalze aus einem Rahmen herausschwenkbar ist. Dabei sollen sehr hohe Hubkräfte mittels einer Lifteinheit realisiert werden können, wobei auch gleichzeitig ein synchrones beidseitiges Herausfahren und Herausbewegen der Antriebswalze aus dem Rahmen möglich sein soll. Zudem soll ein Herausschwenken und wieder Einschwenken mit einer sehr platzsparenden Lifteinheit möglich sein.

### LÖSUNG DER AUFGABE

Zur Lösung dieser Aufgabe führt dass in der Lifteinheit zumindest eine Antriebseinheit zum beidseitigen Anheben der Antriebswalze vorgesehen ist.

Bei der vorliegenden Erfindung hat sich als besonders vorteilhaft erwiesen, dass die Lifteinheit sehr platzsparend zwischen zwei Rahmenschenkeln eines Rahmens eingesetzt ist und zur Übertragung eines sehr grossen Antriebsmomentes von einer Hohlwelle der Lifteinheit rotativ angetrieben wird.

Jeweils stirnseitig schliessen an die Hohlwelle Profilierungen, ausgebildet als Kurvenscheiben, Exzenter, Nocken od. dgl., an, um entsprechende in die Profilierung eingreifende Hilfsrahmen, zwischen welchen eine Antriebswalze festgelegt ist, herauszuschwenken oder einzufahren. Dabei hat sich als vorteilhaft erwiesen, innerhalb der Hohlwelle der Lifteinheit eine Antriebseinheit zu integrieren, die im wesentlichen aus zumindest einem Elektromotor und einem Planetengetriebe gebildet ist. Als vorteilhaft hat sich erwiesen, einen Abtriebsplanetenradträger gegenüber dem Rahmenschenkel einends festzulegen und andernends eine Motorhaltewelle in dem anderen Rahmenschenkel festzulegen.

Auf diese Weise lässt sich mittels des Elektromotors das Planetengetriebe, bevorzugt ausgebildet als dreistufiges Planetengetriebe, antreiben, wobei die jeweiligen Planeten des Planetengetriebes innen die Hohlwelle der Lifteinheit kämmen und somit ein sehr grosses Drehmoment bei kleinstem Einbauraum und Einbaugewicht auf die Hohlwelle der Lifteinheit übertragen wird.

Zum synchronen Anheben der beiden Rahmenschenkel und somit der Antriebswalze greifen entsprechende Walzenelemente in eine Profilierung, Kurvenscheibe od. dgl. endseits der Hohlwelle ein, wobei auf diese Weise synchron die Antriebswalze bzw. die beiden Hilfsrahmen aus dem Rahmen herausgeschwenkt und wieder eingefahren werden können.

Von Vorteil ist auch bei der vorliegenden Erfindung, dass die Vorrichtung als sehr kompakte PDU mit geringem Einbaugewicht, geringem Platzbedarf werden kann, wobei auf einfache Weise durch Verdrehen der Lifteinheit als Hohlwelle beidseitig und synchron die Antriebswalze ausschwenkbar bzw. einfahrbar ist.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht einer Vorrichtung zum Transportieren von Frachtgut in einer Gebrauchslage;
Figur 2 eine Seitenansicht der Vorrichtung gemäss Figur 1 in einer Ruhelage;
Figur 3 einen Teillängsschnitt durch eine Lifteinheit gemäss Figur 1.

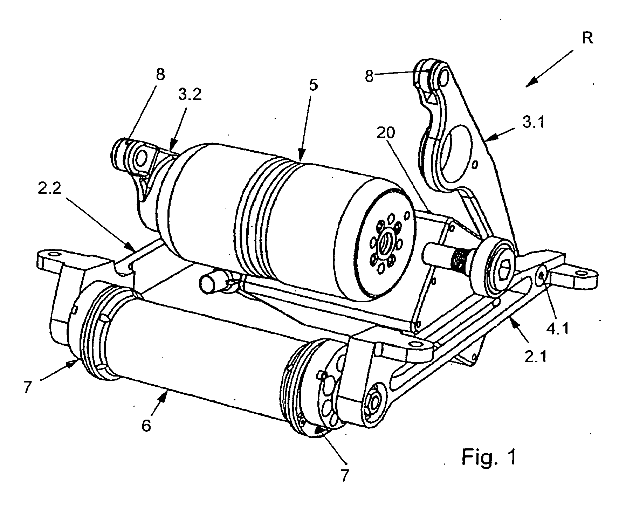

Gemäss Figur 1 weist eine Vorrichtung R zum Transportieren von Frachtgut, insbesondere von Frachtcontainern in Frachträumen von Flugzeugen, einen Rahmen 1 auf, welcher aus zwei einzelnen Rahmenschenkeln 2.1, 2.2 gebildet ist.

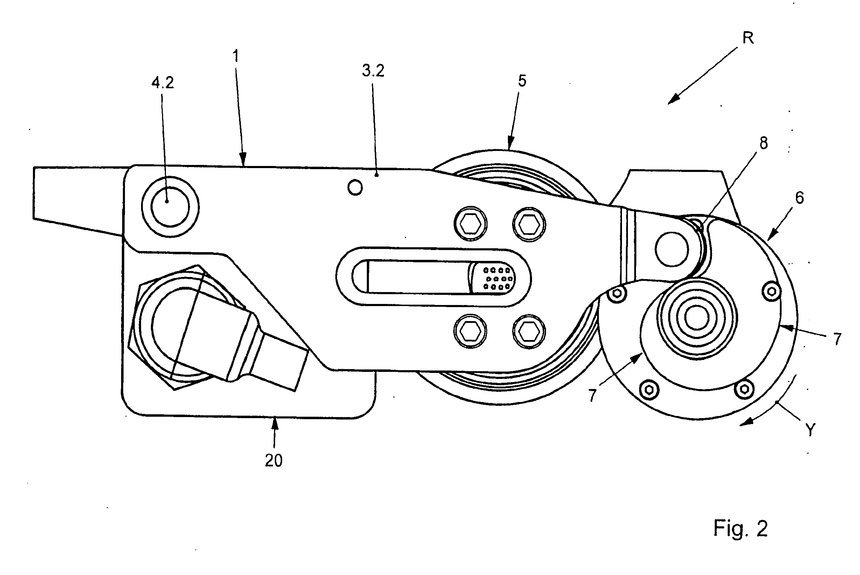

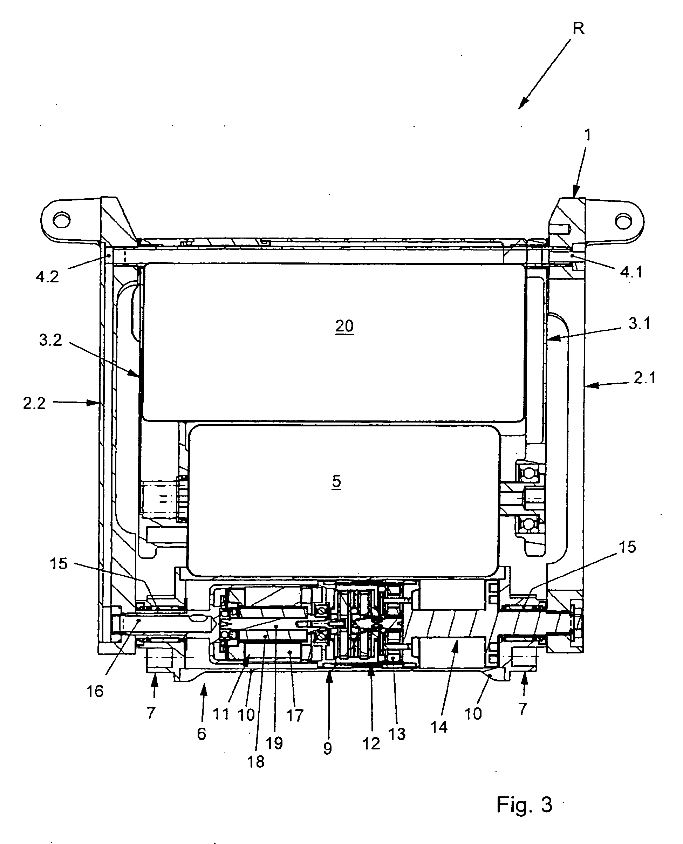

Einends der beiden Rahmenschenkel 2.1, 2.2 ist innerhalb ein Hilfsrahmen 3.1, 3.2 über hier nur angedeutet Gelenke 4.1, 4.2, wie es auch aus den Figuren 2 und 3 ersichtlich ist, verschwenkbar gelagert. Endseits der Hilfsrahmen 3.1, 3.2 ist dazwischen eine Antriebswalze 5 rotativ antreibbar gelagert, wobei die Antriebswalze 5 bevorzugt am Hilfsrahmen 3.2 fest und rotativ bewegbar gegenüber dem Hilfsrahmen 3.1 festgelegt ist. Um die Antriebswalze 5 mit einem zu transportierenden Frachtgut, insbesondere mit Frachtcontainern in Berührung zu bringen, ist eine Lifteinheit 6 vorzugsweise endseits zwischen den Rahmenschenkel 2.1, 2.2 eingesetzt.

Die Lifteinheit 6 weist endseits, wie es in Figur 1 angedeutet und in den Figuren 2 und 3 näher dargestellt ist, entsprechende Profilierungen 7 auf, die bevorzugt, wie es insbesondere in Figur 2 dargestellt ist, als Kurvenscheibe ausgebildet sind.

In Figur 2 ist ersichtlich, dass endseits über ein am Hilfsrahmen 3 zugeordnetes Walzenelement 8 dieser auf der Profilierung 7, insbesondere Kurvenscheibe, Exzenter, Nocke od. dgl., aufliegt und durch entsprechendes aktives Verdrehen der Lifteinheit 6, wie es in Pfeilrichtung Y angedeutet ist, ein Herausbewegen der Hilfsrahmen 3.1, 3.2 gegenüber dem Rahmen 1 verschwenkbar um die Gelenke 4.1, 4.2 ermöglicht wird.

Bei der vorliegenden Erfindung hat sich als besonders vorteilhaft erwiesen, dass in der Lifteinheit 6 zumindest eine Antriebseinheit 9 integriert eingesetzt ist, welche die Lifteinheit 6, insbesondere deren Hohlwelle 10, in oder entgegen der Pfeilrichtung Y antreibt bzw. bewegt.

Es hat sich dabei als besonders vorteilhaft erwiesen, dass sich endseits der Hohlwelle 10 jeweils stirnseitig die Profilierungen 7, insbesondere Kurvenscheiben, anschliessen, die mit den Walzenelementen 8 und den Hilfsrahmen 3.1, 3.2 in Eingriff stehen.

Auf diese Weise werden absolut synchron und gleichzeitig durch reines Antreiben der Hohlwelle 10 die Hilfsrahmen 3.1, 3.2 und damit auch die Antriebswalze 5 aus den Rahmenschenkel 2.1, 2.2 gegen ein Frachtgut, insbesondere einen Frachtcontainer, bewegt.

Die Antriebseinheit 9 ist innerhalb der Hohlwelle 10 eingesetzt und besteht im wesentlichen aus einem Elektromotor 11 und daran anschliessendem Planetengetriebe 12.

Als besonders vorteilhaft hat sich bei der vorliegenden Erfindung erwiesen, dass das Planetengetriebe 12, insbesondere dessen Planeten 13, die Hohlwelle 10 der Lifteinheit 6 rotativ zur Gewährleistung des Hubantriebes bzw. zum Anheben und Absenken der Antriebswalze 5 kämmen.

Dabei sitzt endseits, im Rahmenschenkel 2.1 fest eingesetzt, ein Abtriebsplanetenradträger 14, der einerseits im stirnseitigen Bereich, im Bereich der Profilierung 7, die Hohlwelle 10 über Lager 15 rotativ lagert, wobei andernends im Rahmenschenkel 2.2 eine Motorhaltewelle 16 vorgesehen ist, auf welcher ebenfalls das andere Ende der Hohlwelle 10 im Bereich der stirnseitigen Profilierung 7 über weitere Lager 15 rotativ gelagert ist.

Im Anschluss an die Motorhaltewelle 16 ist koaxial ein Stator 17 des Elektromotors 11 mit der Motorhaltewelle 16 als feststehendem Teil verbunden.

Zum stirnseitiger Anschluss an die Motorhaltewelle 16 schliesst ein Rotor 18 mit Rotorwelle 19 an und stellt den Antrieb zum ein-, bevorzugt zum dreistufigen Planetengetriebe 12 her.

Durch das Festlegen des Abtriebsplanetenradträgers 14 treiben dann die entsprechenden Planeten 13 die äussere Hohlwelle 10 der Lifteinheit 6 zur rotativen Bewegung der Profilierung 7, insbesondere Kurvenscheiben, Exzenter und Nocken od. dgl., an, um den Hilfsrahmen 3.1, 3.2 und somit die Antriebswalze 5 aus dem Bereich der Rahmenschenkel 2.1, 2.2 herauszubewegen oder wieder einzufahren.

Bei der vorliegenden Erfindung lässt sich durch diese Bauweise eine sehr hohe Anpresskraft bei geringst möglicher Reibung erzeugen, wobei eine sehr kleine Bauweise für die eigentlichen Lifteinheit 6 gewährleistet wird. Zudem lässt sich eine sehr kompakte und kleine Bauweise der gesamten Vorrichtung R schaffen, wobei sehr kompakt eine Steuerung 20 zwischen den Hilfsrahmen 3.1, 3.2, die Antriebswalze 5 unmittelbar im Anschluss zwischen den beiden Rahmenschenkel 2.1, 2.2 des Rahmens 1 und die Lifteinheit 6 vorgesehen sind.

### Bezugszeichenliste

| | | | | | |
|---|---|---|---|---|---|
| 1 | Rahmen | 34 | | 67 | |
| 2 | Rahmenschenkel | 35 | | 68 | |
| 3 | Hilfsrahmen | 36 | | 69 | |
| 4 | Gelenk | 37 | | 70 | |
| 5 | Antriebswalze | 38 | | 71 | |
| 6 | Lifteinheit | 39 | | 72 | |
| 7 | Profilierung | 40 | | 73 | |
| 8 | Walzenelement | 41 | | 74 | |
| 9 | Antriebseinheit | 42 | | 75 | |
| 10 | Hohlwelle | 43 | | 76 | |
| 11 | Elektromotor | 44 | | 77 | |
| 12 | Planetengetriebe | 45 | | 78 | |
| 13 | Planet | 46 | | 79 | |
| 14 | Abtriebsplanetenträger | 47 | | | |
| 15 | Lager | 48 | | R | Vorrichtung |
| 16 | Motorhaltewelle | 49 | | | |
| 17 | Stator | 50 | | Y | Pfeilrichtung |
| 18 | Rotor | 51 | | | |
| 19 | Motorwelle | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Transportieren von Frachtgut, insbesondere vonFrachtcontainern in Frachträumen von Flugzeugen, insbesondere Power Drive Unit (PDU) mit einer in einem Rahmen (1) gelagerten Antriebswalze (5) und einer Lifteinheit (6),
**dadurch gekennzeichnet,**
**dass** in der Lifteinheit (6) zumindest eine Antriebseinheit (9) zum beidseitigen Anheben der Antriebswalze (5) vorgesehen ist.

2. Vorrichtung nach Anspruch 1, **dadurch gekennzeichnet, dass** die Antriebseinheit (9) aus einem Elektromotor (11) und einem ein- oder mehrstufigen Planetengetriebe (12) gebildet ist.

3. Vorrichtung nach Anspruch 1 oder 2, **dadurch gekennzeichnet, dass** die Lifteinheit (6) eine Hohlwelle (10) aufweist, in welcher einends ein Abtriebsplanetenradträger (14) fest mit einem Rahmenschenkel (2.1) des Rahmens (1) verbunden, und die Hohlwelle (10) gegenüber den Rahmenschenkel (2.1, 2.2) rotativ bewegbar ist.

4. Vorrichtung nach Anspruch 3, **dadurch gekennzeichnet, dass** andernends in die Hohlwelle (10) eine Motorhaltewelle (16) eingreift, die mit dem Rahmenschenkel (2.1, 2.2) verbunden ist, welcher einer Auflage für einen oder mehrere Statoren (17) dient, wobei die Hohlwelle (10) rotativ gegenüber der Motorhaltewelle (16) verdrehbar ist.

5. Vorrichtung nach Anspruch 3 oder 4, **dadurch gekennzeichnet, dass** die Lifteinheit (6), insbesondere die Hohlwelle (10) einends oder beidends mit
einer Profilierung (7), insbesondere Kurvenscheibe oder Exzenter od. dgl. versehen ist.

6. Vorrichtung nach Anspruch 4 oder 5, **dadurch gekennzeichnet, dass** zwischen dem Planetengetriebe (12) und der Motorhaltewelle (16) ein Rotor (18) des Elektromotors (11) rotativ gelagert ist und das ein- oder mehrstufig ausgebildete Planetengetriebe (12) kämmt.

7. Vorrichtung nach wenigstens einem der Ansprüche 3 bis 6, **dadurch gekennzeichnet, dass** der Abtriebsplanetenradträger (14) gegenüber dem Rahmenschenkel (2.1) festgelegt ist und über die einzelnen Planeten (13) die Hohlwelle (10) innen zum rotativen Hin- und Herbewegen antreibt.

8. Vorrichtung nach wenigstens einem der Ansprüche 1 bis 7, **dadurch gekennzeichnet, dass** die Antriebswalze (5) zwischen zwei Hilfsrahmen (3.1, 3.2) gelagert ist, die über Gelenke (4) gegenüber dem Rahmen (1) insbesondere dessen Rahmenschenkel (2.1, 2.2) verschwenkbar verbunden sind.

9. Vorrichtung nach Anspruch 8, **dadurch gekennzeichnet, dass** die endseitigen Bereiche der Hilfsrahmen (3.1, 3.2) mit der Profilierung (7), insbesondere der Kurvenscheibe,der Lifteinheit (6), zum Heben und Senken der Antriebswalze (5) in Eingriff stehen.

10. Vorrichtung nach Anspruch 8 oder 9, **dadurch gekennzeichnet, dass** zwischen dem Hilfsrahmen (2.1, 2.2) im Bereich der Gelenke (4) eine Steuerung und im endseitigen Bereich des Hilfsrahmens (3.1, 3.2) die Antriebswalze (5) mit Walzenelementen (8) vorgesehen ist, wobei endseits der jeweils beiden Rahmenschenkel (2.1, 2.2) des Rahmens (1) die Lifteinheit (6) mit Hohlwelle (10) und jeweils stirnseitig anschliessenden Profilierungen (7) angeordnet ist, die mit den Walzenelementen (8) des Hilfsrahmens (3.1, 3.2) in Eingriff steht.

## Claims

1. Device for transporting freight, in particular freight containers in cargo compartments of aircraft, in particular a power drive unit (PDU) having a drive roller (5) mounted in a frame (1) and a lifting unit (6),
**characterised**
**in that** at least one drive unit (9) for lifting the drive roller (5) on both sides is provided in the lifting unit (6).

2. Device according to Claim 1, **characterised in that** the drive unit (9) is formed from an electric motor (11) and a planetary gearing (12) with one or more stages.

3. Device according to Claim 1 or 2, **characterised in that** the lifting unit (6) has a hollow shaft (10), in which at one end an output planet-gear carrier (14) is fixedly connected to a frame member (2.1) of the frame (1), and the hollow shaft (10) is rotationally movable relative to the frame members (2.1, 2.2).

4. Device according to Claim 3, **characterised in that** at the other end a motor-supporting shaft (16) engages in the hollow shaft (10) and is connected to the frame member (2.1, 2.2), which serves as a support for one or more stators (17), the hollow shaft (10) being rotatable relative to the motor-supporting shaft (16).

5. Device according to Claim 3 or 4, **characterised in that** the lifting unit (6), in particular the hollow shaft (10), is provided at one end or both ends with a profiling (7), in particular a cam disc or an eccentric or the like.

6. Device according to Claim 4 or 5, **characterised in that** a rotor (18) of the electric motor (11) is rotationally mounted between the planetary gearing (12) and the motor-supporting shaft (16) and meshes with the planetary gearing (12) formed with one or more stages.

7. Device according to at least one of Claims 3 to 6, **characterised in that** the output planet-gear carrier (14) is fixed relative to the frame member (2.1) and, via the individual planets (13), drives the hollow shaft (10) internally to move rotationally to and fro.

8. Device according to at least one of Claims 1 to 7, **characterised in that** the drive roller (5) is mounted between two auxiliary frames (3.1, 3.2) which are connected pivotably, via joints (4), relative to the frame (1), in particular the frame members (2.1, 2.2) thereof.

9. Device according to Claim 8, **characterised in that** the end regions of the auxiliary frames (3.1, 3.2) engage with the profiling (7), in particular the cam disc, of the lifting unit (6), to lift and lower the drive roller (5).

10. Device according to Claim 8 or 9, **characterised in that** a control means is provided between the auxiliary frame (2.1, 2.2) in the region of the joints (4), and the drive roller (5) is provided with roller elements (8) in the end region of the auxiliary frame (3.1, 3.2), the lifting unit (6) with hollow shaft (10) and, at each end face, an adjoining profiling (7) being arranged at the end of each of the two frame members (2.1, 2.2) of the frame (1), the profiling engaging with the roller elements (8) of the auxiliary frame (3.1, 3.2).

## Revendications

1. Dispositif de transport de transport de fret, en particulier de conteneurs à fret dans des soutes à fret d'avions, en particulier Power Drive Unit (PDU), avec un cylindre d'entraînement (5) monté dans un cadre (1) et une unité de levage (6),
**caractérisé par le fait que**
dans l'unité de levage (6) est prévue au moins une unité d'entraînement (9) pour le levage des deux côtés du cylindre d'entraînement (5).

2. Dispositif selon la revendication 1, **caractérisé par le fait que** l'unité d'entraînement (9) est formée d'un moteur électrique (11) et d'un engrenage planétaire (12) à un ou plusieurs étages.

3. Dispositif selon la revendication 1 ou 2, **caractérisé par le fait que** l'unité de levage (6) présente un arbre creux (10) dans lequel, à une extrémité, un porte-roue planétaire de sortie (14) est solidaire d'une branche (2.1) du cadre (1), et que l'arbre creux (10) est mobile en rotation par rapport à la branche de cadre (2.1, 2.2).

4. Dispositif selon la revendication 3, **caractérisé par le fait qu'**à l'autre extrémité s'engage dans l'arbre creux (10) un arbre de maintien de moteur (16) qui est connecté à la branche de cadre (2.1, 2.2) qui sert d'appui pour un ou plusieurs stators (17), l'arbre creux (10) pouvant se déplacer en rotation par rapport à l'arbre de maintien de moteur (16).

5. Dispositif selon la revendication 3 ou 4, **caractérisé par le fait que** l'unité de levage (6), en particulier l'arbre creux (10), est muni, à une extrémité ou aux deux extrémités, d'un profilage (7), en particulier d'une came ou d'un excentrique ou autre.

6. Dispositif selon la revendication 4 ou 5, **caractérisé par le fait qu'**entre l'engrenage planétaire (12) et arbre de maintien de moteur (16) est monté en rotation un rotor (18) du moteur électrique (11) qui engrène un engrenage planétaire (12) réalisé à un ou plusieurs étages.

7. Dispositif selon au moins l'une des revendications 3 à 6, **caractérisé par le fait que** le porte-roue planétaire de sortie (14) est fixé par rapport à la branche de cadre (2.1) et entraîne intérieurement, par l'intermédiaire des roues planétaires (13) individuelles, l'arbre creux (10) en vue d'un mouvement rotatif en va-et-vient.

8. Dispositif selon au moins l'une des revendications 1 à 7, **caractérisé par le fait que** le cylindre d'entraînement (5) est monté entre deux cadres auxiliaires (3.1, 3.2) qui sont connectés de manière pivotable, par l'intermédiaire d'articulations (4), par rapport au cadre (1), en particulier sa branche de cadre (2.1, 2.2).

9. Dispositif selon la revendication 8, **caractérisé par le fait que** les zones d'extrémité des cadres auxiliaires (3.1, 3.2) sont en prise avec le profilage (7), en particulier la came de l'unité de levage (6), en vue du levage ou de la descente du cylindre d'entraînement (5).

10. Dispositif selon la revendication 8 ou 9, **caractérisé par le fait qu'**il est prévu entre le cadre auxiliaire (2.1, 2.2), dans la zone des articulations (4), une commande et, dans la zone d'extrémité du cadre auxiliaire (3.1, 3.2), le cylindre d'entraînement (5) avec des éléments de cylindre (8), du côté de l'extrémité des deux branches (2.1, 2.2) respectives du cadre (1) étant disposée l'unité de levage (6) à arbre creux (10) et des profilages (7) respectifs venant se raccorder du côté frontal, laquelle est en prise avec les éléments de cylindre (8) du cadre auxiliaire (3.1, 3.2).
